# EUROPEAN PATENT APPLICATION

(11) **EP 1 503 285 A1**
(43) Date of publication of application: **02.02.2005**
(21) Application number: 03291898.9
(22) Date of filing: 30.07.2003
(51) Int. Cl.: G06F 9/46, H04L 29/08

(54) **Communication system and method**

(71) Applicant: Hewlett-Packard Development Company, L.P., Houston, TX 77070 (US)
(72) Inventor: Berranger, Jean-Alexis, Meylan 38240 (FR)
(74) Representative: Lloyd, Richard Graham

(57) **Abstract**

Embodiments of the present invention relate to a communication system and method for invoking a service in response to application of at least one rule to a self-descriptive service request.

## Description

### Field of the Invention

The present invention relates to a data communication system and method and, more particularly, to a system and method for associating a request for a service with an appropriate service in a flexible manner.

### Background to the Invention

Within a communication system or an intelligent network, an entity of that network, or a caller, can submit a request to a service provider or router for a service to be performed or for routing information to be retrieved and returned. Within conventional service provision mechanisms, or within conventional routing schemes, a fixed format request is usually used, especially in the case of network PDU type routing. Also, a limited, that is, a restrained, property set or action set is made available to respond to the request.

An example of services to be required to be supported by network entities will be described with reference to the use of transaction capabilities application part functions. Transaction capabilities application part (TCAP) supports the deployment of advanced intelligent network (AIN) services by enabling information exchange between signalling points using SCCP. For example, an SCP might use TCAP to query a further SCP to determine the routing number for an 800 number. Alternatively, or additionally, for example, calling codes might be validated using a TCAP query and associated response messages. Alternatively, within a GSM context, mobile subscribers roaming into a service area managed by a different mobile switching centre might cause the integrated visitor location register (VLR) to request a service profile from the subscriber's home location register (HLR) using the mobile application part information carried by TCAP messages.

It will be appreciated that the ability to service requests using the TCAP functions of SS7 depends upon the format of the request being fixed and known in advance. Therefore, the network entity intended to process any such requests must also expect the request to have the fixed and previously defined format. It will be appreciated that this leads to inflexibility in terms of the services that can be offered by such a network entity. If the services of such a network entity are intended to be expanded, corresponding request formats would have to be defined in advance. However, the matching of the request to a corresponding service would still remain inflexible.

Furthermore, it will be appreciated that the lack of flexibility of prior art systems is also apparent when considering situations in which a type of service remains the same but the network type or request format changes as between network entities. For example, an ISUP to SIP transition might present challenges that are difficult to solve in a flexible manner.

It is an object of embodiments of the present invention at least to mitigate some of the problems of the prior art.

### Summary of the Invention

Accordingly, a first aspect of embodiments of the present invention provides a system comprising an analyser to identify at least one characteristic of a self-descriptive service request; and a rule processor to apply at least one rule to the at least one characteristic and to invoke a service associated with the at least one rule in response to applying the rule to the at least one characteristic.

Advantageously, using embodiments of the present invention provides a developer with significant development flexibility, that is, the developer does not need to establish in advance a fixed set of parameters used to respond to requests for a service. It will be appreciated by those skilled in the art that using the rules provides significant flexibility as compared to static routing or servicing schemes. This allows network entities to distribute calls according to any set of call parameters or criteria and is not restricted to, for example, dealing with telephone calls.

It will be appreciated that a network entity or communication system will usually offer a number of services. Suitably, embodiments provide a communication system in which the at least one rule is one of a plurality of rules having respective services and in which the rule application engine comprises means to apply at least selectable rules of the plurality of rules to the at least one characteristic and means to invoke appropriate services of the respective services according to applying the at least selectable rules to the at least one characteristic.

Preferably, the plurality of rules have associated priorities governing an order of application of the at least selectable rules by the rule application engine.

In preferred embodiments there is provided a rule configuration manager for configuring the at least one rule. Preferably, the rule configuration manager is arranged to configure the plurality of rules.

Having encountered a new service request or a new characteristic of an existing service request, prior art systems would not be able to handle such a service request in a meaningful manner. However, embodiments of the present invention provide a communication system further comprising a modifier having means to derive the self-descriptive service request, having the at least one characteristic, from a further self-descriptive service request having a respective at least one characteristic. Preferably, the derivation of the self-descriptive service request performed by the modifier is responsive to application of the at least one rule to the respective at least one characteristic of the further self-descriptive service request.

A further aspect of embodiments of the present invention provides a communication method comprising the step of invoking a service in response to application of a configurable rule set comprising at least one rule to a self-descriptive service request.

A still further aspect of embodiments of the present invention provides a communication system comprising means to invoke a service in response to application of a configurable rule set comprising at least one rule associated with the service, to a self-descriptive service request.

A further aspect of embodiments of the present invention provides a communication system comprising a receiver for receiving a service request, having a plurality of properties; an analyser for identifying the plurality of properties of the received service request and a configurable rule application processor for subjecting the identified plurality of properties to a number of configurable rules, each associated with at least one service, to identify an association between at least one of the rules and at least one property of the identified plurality of properties; and an invocation mechanism for invoking a service corresponding to any such identified rule.

Preferably, embodiments provide a communication system in which the configurable rule application processor comprises means to output an indication of a failure to identify a predeterminable association between at least one of the rules and at least one property of the identified plurality of properties. Embodiments also provide a communication system further comprising an assessor to assess the service request in response to the output containing an indication of the failure; means to create at least one further rule having an association with at least one of the properties of the service request and means for making the at least one further rule available to the configurable rule application processor for use in processing service requests.

Suitably, the rules can be updated to accommodate new objects, that is, new service requests for which a match with one of the existing rules could not be found. It will be appreciated that this gives embodiments of the present invention great flexibility in that new requests for previously unsupported services can be readily accommodated.

Embodiments provide a communication system in which the invocation mechanism comprises means to create a modified service request having a further property associated with the service request; and an iteration mechanism for subjecting the modified service request to further processing.

Preferably, embodiments provide a communication system in which the iteration mechanism comprises means to forward the modified service request to at least one of the receiver, the analyser and the configuration rule application processor.

Preferred embodiments provide a communication system further comprising means to create, and associate, at least one further property with the identified properties of the service request and means to output the at least one further property for further processing by at least the configurable rule application processor.

Preferably, there is provided a communication system in which the means to output the at least one further property comprises means to output the at least one further property together with at least one of the identified properties of the plurality of properties of the service request.

Accordingly, rules that might have been previously inapplicable, might become applicable in light of the newly generated characteristic or property, when that property, either alone or together with previously identified characteristics or properties, is subjected to the rules by the rule processor.

Embodiments provide a communication system in which the means to output the at least one further property comprises means to output the at least one further property together with at least a number of the identified properties. Preferably, embodiments provide a communication system in which the iteration mechanism comprises means to forward newly generated characteristics or a property to the configurable rule application processor for further processing.

Preferred embodiments provide a communication system in which the configurable rules are prioritised such that the identified properties are subjected to the rules according to the priority of the rules.

A further aspect of embodiments of the present invention provides a communication method for processing a service request having a plurality of characteristics; the method comprising the step of identifying at least one of the plurality of characteristics; and subjecting the at least one identified characteristic to a plurality of rules to identify an association between at least one rule of the plurality of rules and the at least one identified characteristic; and invoking a service associated with the at least one rule of the plurality of rules.

Preferred embodiments provide a communication method further comprising the step of modifying the plurality of rules, or at least one of the plurality of rules.

Preferably, there is provided a communication method in which the step of modifying comprises the step of modifying the plurality of rules in response to the at least one identified characteristic.

Embodiments provide a communication method in which the step of modifying the plurality of rules comprises the steps of creating a further rule in response to the at least one identified characteristic and adding the further rule to the plurality of rules.

Embodiments provide a communication method further comprising the step of creating a further characteristic and subjecting at least the further characteristic to at least one rule of the plurality of rules to identify a predeterminable association between the at least one rule and the further characteristic.

Preferably, embodiments provide a communication method further comprising the step of subjecting the further characteristic and at least one of the identified characteristic to the plurality of rules to identify an association between at least one of the plurality of rules and the further characteristic and the at least one of the identified characteristic.

A still further aspect of embodiments of the present invention provides a computer program comprising computer program code means to implement a system or method as described or claimed in this application. Preferably, a yet further aspect of embodiments of the present invention provides a computer program product comprising computer readable storage storing such a computer program. It will be appreciated that the medium might take the form of an optical or magnetic storage medium or, for example, a device such as a chip or other programmable device.

A further aspect of embodiments of the present invention provides a communication system for responding to a service request, having associated request properties or characteristics, by providing, or providing access to, a corresponding service of a plurality of services; the communication system comprising an introspection entity arranged to identify the request properties or characteristics and to forward data associated with the identified request properties or characteristics to a configurable rule application processor comprising a set of, preferably, prioritised rules used to compare or match the identified request characteristics or properties with an appropriate or corresponding service.

### Brief Description of the Drawings

Embodiments of the present invention will now be described, by way of example only, with reference to the accompanying drawings in which:
figure 1 shows a prior art communication system;
figure 2 shows a data communication system according to an embodiment of the present invention; and
figure 3 shows a flowchart for operating the communication system shown in figure 2.

### Detailed Description of the Preferred Embodiments

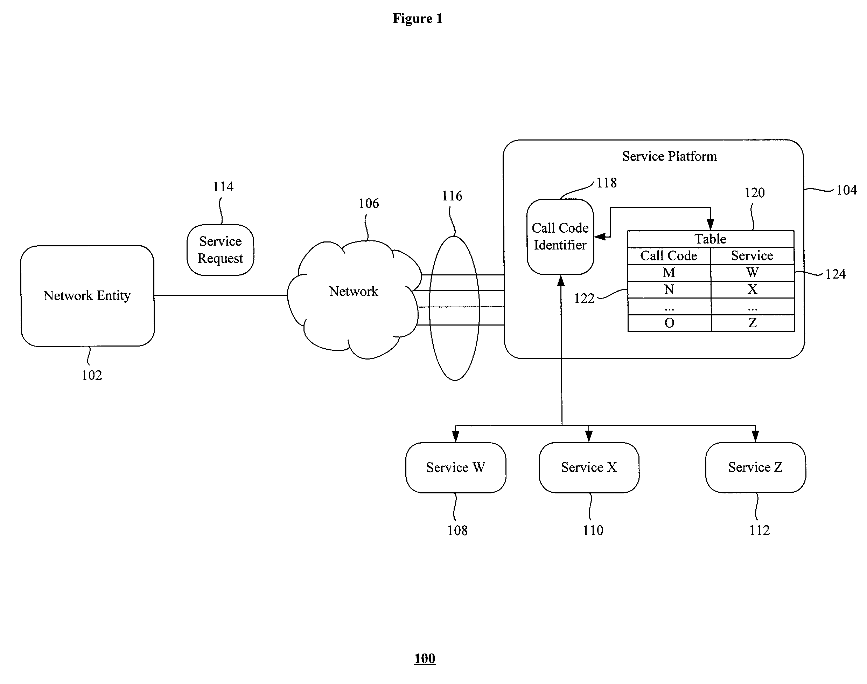

Referring to figure 1, there is shown a communication system 100 comprising a network entity 102 that communicates with a service platform or other network entity 104 via a communication network 106. The network entity 102 uses the service platform 104 to obtain communication or network services. The services are provided by respective service provider entities 108 to 112 that form part of, or are accessible via, the service platform 104. A request for a service 114 is forwarded to the service platform 104 usually via an appropriate service specific line of a number of such service specific lines 116. The service platform 104 comprises, for example, a call code identifier 118 for identifying the calling code of the incoming service request 114. The call code identifier 118 uses a table 120 that maps a number of call codes 122 to corresponding service identifiers 124. The service identifiers 124 are used to identify the available services 108 to 112. The call code identifier 118, having found a match for the identified call code (not shown) in the table 120, uses the corresponding service identifier 124 to provide the requested service to the network entity 102.

It will be appreciated that the network entity 102 might be any element or entity of a communication network or system that requires a service to be made available or to be performed by another network element or entity. Therefore, the network entity 102 might comprise, for example, a telephone handset using DTMF tones to obtain a corresponding service. The services performed or accessed by the service platform 104 might comprise, for example, DTMF tone processing and detection, voice recognition or response services, provision of voice menus or any other network, routing, provision of a voice portal, network announcements or other network or data processing services.

It will be appreciated that the call code identifier 118 can straight forwardly perform or respond to a service request 114 since the service request has a fixed format and the data needed to identify the appropriate service can be readily extracted from the service request.

However, it will also be appreciated that changing the available services 108 to 112 necessitates making changes to the table 120 and also might necessitate making changes to the number of service specific lines or the allocation of those service specific lines to various services. Furthermore, the call code identifier 118 would also have to be modified to accommodate changes in call code identifiers or service request formats for any new services to be provided by the service platform. It will be appreciated by those skilled in the art that accommodating these changes is not trivial as they involve significant developer time and effort to implement.

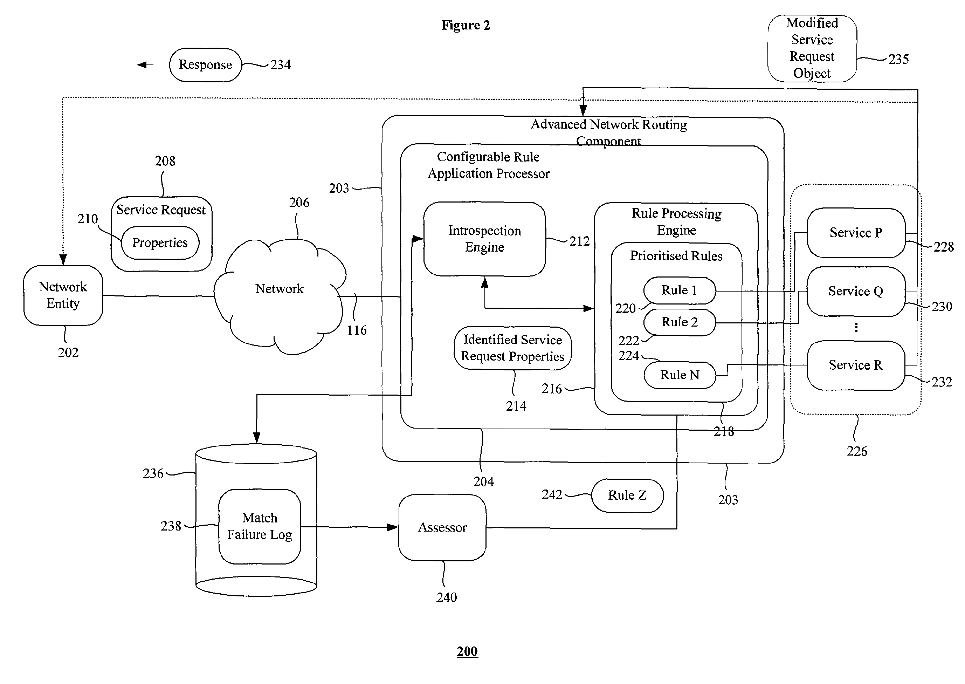

Referring to figure 2, there is shown a communication system 200 according to an embodiment of the present invention. The communication system 200 comprises a network entity 202 that can communicate with an advanced service routing component 203 via a network 206 using a service request 208 having at least one discoverable characteristic or property, and, preferably a number of discoverable properties or characteristics 210. Preferably, the service request, in preferred embodiments, takes the form of a Java object. However, the service request might take other forms such as, for example, an XML file or other self-descriptive element or data entity, that is, some other element or entity whose properties are discoverable. It will be appreciated that the advanced service routing component 203 might provide any, or selected services, of the services described above in relation to the service platform 104.

The advanced service routing component 203 comprises a configurable rule application processor 204 having an introspection engine 212 that performs introspection upon the service request 208 to identify its properties or characteristics 210 or at least one such property or characteristic. It will be appreciated that the introspection engine 212, in preferred embodiments, is realised using the Java class *Introspector* and represents a realisation of at least part of an analyser.

The identified service request properties or characteristics 214 are processed by a rule application engine 216 of the configurable rule application processor 204. The rule application engine 216 comprises a number of prioritised rules 218. For the purposes of illustration, only three rules are shown; namely, a first rule 220, a second rule 222 and an N^{th} rule 224. Each of the rules 220 to 224 are associated with services 226. The rules 218 represent an embodiment of a configurable rule set, that is, a set of rules for which at least one rule can be configured or modified or for which the set of rules can be configured or modified. For example, a new rule can be added to the set of rules 218, a rule can be removed from the set of rules, an existing rule can be modified, or, alternatively or additionally, the order of application of the rules can be modified.

Again for the purposes of illustration only, each rule is shown as being associated with a single service. However, embodiments can be realised in which each rule is associated with more than one service and in which a single service is associated with more than one rule. It can be appreciated that the first rule 220 is associated with a first service 228, the second rule 222 is associated with a second service 230 and the N^{th} rule 224 is associated with an N^{th} service 232. Each, or selectable services, of the services 228 to 232 can perform a function on behalf of the network entity 202 and, optionally, provide a response 234 to the service request 208. The configurable rule application processor 204 and the rule processing engine 216 represent a realisation of at least part of a rule processor or configurable rule processor for subjecting properties of service requests to various rules.

It will be appreciated by those skilled in the art that the properties or characteristics of the service request 208, even though having been shown schematically as a separate or identifiable entity, are inherent to the service request and are preferably discovered by the process of introspection rather than actually existing as a separate entity or collection within, or as part of, the service request. In essence, a service request object, in preferred embodiments, does not contain a separate object that is a collection of all of the properties of the service request object. In the embodiments described herein, the properties 210 have been presented in the manner depicted in the drawings to facilitate ease of explanation.

In preferred embodiments, the identified service request properties or characteristics 214 are subjected to the prioritised rules 218 according to a predetermined order. Therefore, in some embodiments, the identified service request properties or characteristics 214 might be applied to the first rule 220 and if a condition associated with the first rule 220 is fulfilled by the identified service request characteristics, the first service 228 would be performed. However, if the condition (not shown) associated with the first rule 220 is not fulfilled by the identified service request properties or characteristics 214, those characteristics 214 are subjected to a condition of the second rule 222. Again, if that condition is met, the second service 230 is invoked. The identified service request characteristics are processed in this prioritised manner until a rule is encountered for which the corresponding condition is fulfilled and therefore, for which an appropriate service provider 228 to 232 is invoked. In preferred embodiments, the rules comprise conditions comprise Boolean expressions that form part of, for example, if...then constructs. In such an embodiment, the services might be invoked via a function or service call or calls that follow the then statement. Such function or service calls represent, at least in part, an invocation mechanism via which the services providers 228 to 232 can be invoked.

Preferably, in some embodiments, the service providers 228 to 232, or at least one of those providers, can be arranged to modify at least one of the identified service request characteristics 214 to a produce modified service request object 235. The modified service request object 235 is returned to the configurable application processor engine 204 for subsequent processing, that is, to allow the prioritised rules 218 to be applied, in turn, to the modified service request object 235. Again, as described above with respect to the identified service request characteristics 214, an appropriate one of the services 228 to 232 might be identified by the rules 220 to 224 in accordance with at least one characteristic of the modified service request object 235. Any such service provider 228 to 232 that modifies a service request and re-routes that service request to the configurable application processor 204 for processing represents, at least in part, an embodiment of an iteration mechanism. Alternatively, or additionally, the service request might be modified by adding a further, that is, new characteristic to the service request either in addition to, or separate from, modifying an existing characteristic. Any such newly added characteristic or modified characteristic represents, at least in part, an embodiment of a further characteristic or property associated with the service request.

If a match for the identified service request characteristics 214 cannot be found among the prioritised rules 218, the rule processing engine 216 notifies the configurable rule application processor 204 of the inability to find a match. The configurable application processor 204 stores data associated with the match failure on an HDD 236 in a match failure log 238. The match failure log 238 stores an indication of the entity 202 from which the request 208 was received together with an indication or a copy of that request 208 for later analysis by an assessor 240. The subsequent analysis can be used to identify a service that is appropriate to the network entity 202 or, more particularly, that is appropriate to the service request 208 issued by the network entity 202. This assessment might result in a new rule 242 being created and incorporated into the prioritised rules 218 used by the rule processing engine 216. Alternatively, or additionally, at least one of the existing rules might be modified to allow the configurable application processor 204 to respond to the service request using any modified rules. Alternatively, or additionally, the prioritised of the rules might be changed. It will be appreciated that the assessor might represent, at least in part, an embodiment of a rule configuration manager.

It will therefore be appreciated that the flexibility afforded by introspection of Java objects to identify their characteristics and the rule based testing of those characteristics allows a very flexible advanced service routing component 203 to be implemented. This, in turn, allows that routing component 203 to provide a wide and dynamic range of services to network entities 202.

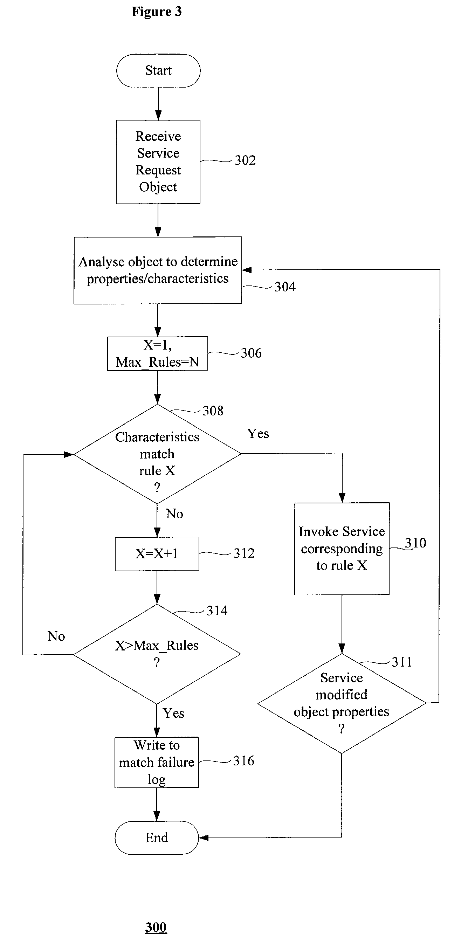

Referring to figure 3, there is shown a flowchart 300 of the processing undertaken by the configurable application processor 204 and the rule processing engine 216. At step 302, the service request 208 is received by the configurable application processor 204. The introspection engine 212 analyses the service request 208, at step 304, to determine its properties or characteristics. As indicated above, the introspection engine 212 preferably uses the introspection or reflection facilities of the Java programming language to identify the characteristics or properties of the service request 208. A count, X, is set to 1 at step 306. Also a constant, Max_Rules, is set to a value equal to the number of rules of the prioritised rules 218. A determination is made at step 308 as to whether or not the characteristics of the analysed service request 208 determined in step 304 match the current rule indicated by the current value of the variable X. If it is determined at step 308 that there is a match between the properties of the service request 208 and a current rule, the service corresponding to that rule is invoked at step 310. If the determination at step 308 is negative, the variable X is incremented by one at step 312. A determination is made at step 314 as to whether or not X is greater than Max_Rules. If the determination at step 314 is negative, processing continues at step 308 where the identified service request characteristics are processed using the next rule. If the determination at step 314 is positive, it can be assumed that the identified service request properties 214 did not match any of the rules and a record to that effect is written, at step 316, to the match failure log 238 stored on the HDD 236.

At step 311 it is determined whether or not the service corresponding to rule X invoked at step 310 modified the service request 208. If the determination at step 311 is positive, the modified service request object is analysed at step 304 where processing continues as previously described but using the modified service request object characteristics or properties.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings),and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A system comprising an analyser to identify at least one characteristic of a self-descriptive service request; and a rule processor to apply at least one rule to the at least one characteristic and to invoke a service associated with the at least one rule in response to applying the at least one rule to the at least one characteristic.

2. A communication system as claimed in claim 1 in which the at least one rule is one of a plurality of rules having respective associated services and in which the rule processor comprises means to apply at least selectable rules of the plurality of rules to the at least one characteristic and means to invoke appropriate services of the respective associated services according to applying the at least selectable rules to the at least one characteristic.

3. A communication system as claimed in claim 2 in which the plurality of rules have associated priorities governing an order of application of the at least selectable rules by the rule processor.

4. A communication system as claimed in either of claims 2 and 3 further comprising a rule configuration manager for configuring the at least one rule.

5. A communication system as claimed in claim 4 in which the rule configuration manager is arranged to configure a number of rules.

6. A communication system as claimed in any of claims 1 to 5, further comprising a modifier having means to derive the self-descriptive service request having the at least one characteristic from a further self-descriptive service request having a respective at least one characteristic.

7. A communication system as claimed in claim 6 in which the derivation of the self-descriptive service request performed by the modifier is responsive to application of the at least one rule to the respective at least one characteristic of the further self-descriptive service request.

8. A communication method comprising the steps of invoking a service in response to application of a configurable rule set, comprising at least one rule, to a self-descriptive service request.

9. A communication system comprising means to invoke a service in response to application of a configurable rule set, comprising at least one rule associated with the service, to a self-descriptive service request.

10. A communication system comprising a receiver for receiving a service request, having a plurality of properties; an analyser for identifying the plurality of properties of the received service request and a rule processor for subjecting the identified plurality of properties to a number of configurable rules, each associated with at least one service, to identify an association between at least one rule of the rules and at least one property of the identified plurality of properties; and an invocation mechanism for invoking a service corresponding to the at least one rule.

11. A communication system as claimed in claim 10 in which the rule processor comprises means to output an indication of a failure to identify an association between at least one rule of the rules and at least one property of the identified plurality of properties.

12. A communication system as claimed in claim 11, further comprising an assessor to assess the service request in response to the output containing an indication of the failure; means to create at least one further rule, or modifying a selectable rule of the configurable rules, having an association with at least one of the properties of the service request and means for making the at least one further rule available to the configurable rule processor for use in processing service requests.

13. A communication system as claimed in any of claims 10 to 12 in which the invocation mechanism comprises means to create a modified service request having a further property associated with the service request and an iteration mechanism for subjecting the modified service request to further processing.

14. A communication system as claimed in claim 13 in which the iteration mechanism comprises means to forward the modified service request to at least one of the receiver, the analyser and the configuration rule processor.

15. A communication system as claimed in any of claims 10 to 14 further comprising means to create, and associate, at least one further property with the identified properties of the service request and means to output the at least one further property for further processing by at least the rule processor.

16. A communication system as claimed in claim 15 in which the means to output the at least one further property comprises means to output the at least one further property together with at least one of the identified properties of the plurality of properties of the service request.

17. A communication system as claimed in claim 16 in which the means to output the at least one further property comprises means to output the at least one further property together with at least a number of the identified properties.

18. A communication system as claimed in claim 13 in which the iteration mechanism comprises means to forward newly generated characteristics or properties to the rule processor for further processing.

19. A communication system as claimed in any of claims 10 to 18 in which the number of rules are prioritised such that the identified properties are subjected to the rules according to the priority of the rules.

20. A communication method for processing a service request having a plurality of characteristics; the method comprising the steps of identifying at least one of the plurality of characteristics; and subjecting the at least one identified characteristic to a plurality of rules to identify an association between at least one rule of the plurality of rules and the at least one identified characteristic; and invoking a service associated with the at least one rule of the plurality of rules.

21. A communication method as claimed in claim 20, further comprising the step of modifying at least one rule of the plurality of rules.

22. A communication method as claimed in claim 21 in which the step of modifying comprises the step of modifying the at least one rule of the plurality of rules in response to the at least one identified characteristic.

23. A communication method as claimed in claim 22 in which the step of modifying the at least one rule of the plurality of rules comprises the steps of creating a further rule in response to the at least one identified characteristic and adding the further rule to the plurality of rules.

24. A communication method as claimed in any of claims 20 to 23, further comprising the step of creating a further characteristic and subjecting at least the further characteristic to at least one rule of the plurality of rules to identify an association between the at leastone rule and the further characteristic.

25. A communication method as claimed in claim 24, further comprising the step of subjecting the further characteristic and at least one of the identified characteristics to the plurality of rules to identify an association between at least one of the plurality of rules and the further characteristic and the at least one of the identified characteristics.

26. A communication system comprising an introspection engine for identifying at least one characteristic of a received service request, a rule processing engine for applying a configurable set of rules to the at least one characteristic to identify a corresponding service of a plurality of services; and means to invoke the identified corresponding service.

27. A communication method comprising the steps of introspecting a service request object to identify at least one characteristic of the object; subjecting the identified at least one characteristic to at least one rule of a plurality of configurable rules, each associated with at least one respective service, to identify an associated service of the respective services; and invoking the identified associated service.

28. A computer program comprising computer program code means to implement a system or method as claimed in any preceding claim.

29. A computer program product comprising computer readable storage storing a computer program as claimed in claim 28.
